# EUROPEAN PATENT SPECIFICATION

(11) **EP 0 811 127 B1**
(45) Date of publication and mention of the grant of the patent: **16.06.1999**
(21) Application number: 96904357.9
(22) Date of filing: 19.02.1996
(51) Int. Cl.: F16L 21/06, F16L 21/08

(54) **A PIPE COUPLING AND A METHOD FOR SECURING A PIPE TO A COUPLING PIECE**
ROHRKUPPLUNG UND VERFAHREN ZUM VERBINDEN EINES ROHRES AN EINEM VERBINDUNGSSTÜCK
RACCORD DE TUYAUTERIE ET PROCEDE DE SOLIDARISATION D'UN TUYAU AVEC UNE PIECE DE RACCORDEMENT

(30) Priority: 20.02.1995 NL 9500320
(43) Date of publication of application: 10.12.1997
(73) Proprietor: ASCO CONTROLS B.V., 3925 ZG Scherpenzeel (NL)
(72) Inventor: VAN DER ZEE, Jan, NL-3925 ZG Scherpenzeel (NL)
(74) Representative: Louet Feisser, Arnold
(86) International application number: NL9600077
(87) International publication number: WO9626382

(56) References cited:
- FR-A- 2 244 115
- GB-A- 1 035 633
- GB-A- 1 358 024

## Description

The invention relates to a pipe coupling comprising a coupling piece and clamping means for securing a pipe to the coupling piece, wherein the coupling piece is provided with a cylindrical hole in which the pipe can extend, whereby the cylindrical hole is provided with a chamber in which a flexible sealing ring is positioned, said clamping means being provided with a cylindrical clamping surface for engaging said pipe and with a radially inwardly oriented edge which can extend behind a radially oriented stop surface at the outside of the coupling piece, whereby said radially oriented stop surface is the side wall of an outwardly open annual groove. Such a pipe coupling is disclosed in GB-A-1 358 024.

A pipe coupling of this kind may be used for securing a pipe to the housing of a valve, whereby said housing is provided with a coupling piece. The coupling piece may also be a part of another element to which the pipe is to be connected, or form the connection between two or more pipes, whereby two or more pipes may be connected to said coupling piece. The pipe and also the coupling piece may thereby be made of a suitable material, such as plastic material, metal or another material which meets the requirements made thereof.

A great many embodiments of pipe couplings are known, which each have their specific characteristics and which are thus to a greater or smaller extent suitable for a particular field of application.

Thus clamp couplings are known in which the end of the pipe is inserted into the coupling piece, after which an annular clamping means, which is wedge-shaped in axial direction, is forced between the pipe and the coupling piece by means of a screwed cap, which engages the externally threaded coupling piece. A clamping means of this type functions both to clamp down the pipe and to form a seal between the pipe and the coupling piece. One of the drawbacks of a pipe coupling of this type is the fact that only a limited axial force can be taken up between the coupling piece and the pipe. Consequently pipe couplings of this type are not suitable for use with pipes containing a medium which is subject to high pressures or high pressure pulses.

Another frequently used pipe coupling consists of a screwed connection, wherein the end of the pipe is externally threaded and the coupling piece is internally threaded. This pipe coupling is capable of taking up a large axial force, whilst in addition an adequate seal may be obtained by suitably selecting the screw thread or by interpolating a sealing element. A drawback of a pipe coupling of this type is the fact that the coupling piece must be rotated relative to the pipe when coupling the two, which is often a difficult operation requiring a great amount of space, in particular when the coupling piece forms part of a valve housing.

The object of the invention is to provide a clamp coupling of simple design, which is capable of transmitting a large axial force between the coupling piece and the pipe, which is simple to fit and wherein the position of the coupling piece with respect to the pipe can be slightly varied in axial direction as well as in other directions.

Another object of the invention is to provide a clamp coupling which can be used several times, that is, which can be removed and be refitted again.

According to the invention said outwardly open annual groove is positioned closer to the open side of the cylindrical hole of the coupling piece, at its end facing the clamping means, than the chamber provided within said hole, whereby said clamping means comprise two parts, each part being provided with a portion of said cylindrical clamping surface.

As a result of this the dimension in radial direction of the clamping means is relatively small, because the clamping means does not need to extend around the coupling piece at the location where the coupling piece is provided with the aforesaid chamber for the sealing ring. As a result of the small difference between the inside diameter and the outside diameter of the clamping means which can be achieved in this manner, it has become simpler to manufacture the clamping means of plate material.

From EP-A-0 053 330 a pipe coupling is known wherein the end of the pipe extends into a cylindrical hole in the coupling piece, whereby a flexible sealing ring is present and whereby a clamping means engages both the pipe and the coupling piece. The clamping means is a precisely machined part, which is provided with an element in the shape of a ring, which acts as a tooth, which element engages with said pipe under deformation of the pipe material. In order to obtain an adequate joint the pipe surface must be adapted to make it possible to effect said engagement, whilst the pipe coupling cannot be removed and be refitted again in view of the fact that the pipe surface is damaged.

After the joint has been made the sealing ring is furthermore positioned in an annular chamber which is bounded by the coupling piece as well as by the clamping , as a result of which a satisfactory support of the sealing ring is impossible, especially if a slight movement of the clamping means with respect to the coupling piece must be possible in the mounted condition of the clamping means or if the clamping means is not mounted exactly coaxially.

According to another aspect of the invention the clamping means is provided with two identical parts which are made of plate material, said parts together forming the cylindrical clamping surface and the aforesaid edge. By manufacturing the clamping means of a metal plate, which is possible because said clamping takes place via a cylindrical clamping surface, a simple and effective construction may be used, as will become apparent from the embodiments yet to be described.

The invention furthermore relates to a method for securing a pipe within a coupling piece as set forth in the claims.

Hereafter a few embodiments of a pipe coupling will be described by way of illustration with reference to the drawing.
Figure 1 is a sectional view of a first embodiment;
Figure 2 is a perspective view of the first embodiment;
Figure 3 is a sectional view of a second embodiment; and
Figure 4 is a view along line IV-IV in Figure 3.

The illustrated embodiments are only shown by way of example and corresponding parts of the two embodiments are numbered alike.

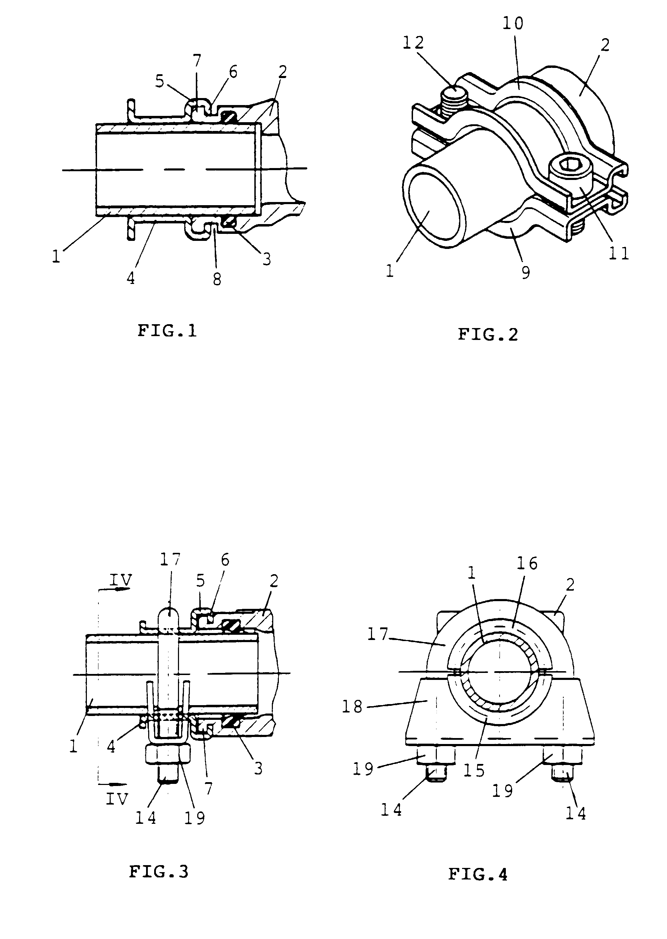

Figure 1 shows a part of a pipe 1 extending inside coupling piece 2. To that end coupling piece 2 is provided with a hole having a diameter which is slightly larger than the outside diameter of pipe 1.

Coupling piece 2 may form part of for example a valve housing, but the invention may be used with every other element to which a pipe is to be secured.

The hole of coupling piece 2, into which pipe 1 is inserted, comprises an internal chamber, in which a sealing ring 3 is provided. Sealing ring 3 is for example an O-ring or another flexible ring which may provide an adequate sealing between pipe 1 and coupling piece 2. Instead of a sealing ring 3 also other sealing means may be used, whereby also a sufficiently close tolerance between pipe 1 and coupling piece 2 may be considered to constitute a seal.

A clamping means 4 is provided around pipe 1, said clamping means also extending around coupling piece 2. To that end clamping means 4 is provided with a radially outwardly extending part 5, which terminates in an inwardly oriented edge 6. Said inwardly oriented edge 6 of clamping means 4 engages behind a part 7 of coupling piece 2. Part 7 of coupling piece 2 is for example formed by providing an external annular chamber 8 in said coupling piece, into which chamber edge 6 may extend.

Figure 2 is a perspective view of the pipe coupling according to Figure 1. The Figure thereby shows that clamping means 4 consists of two shell parts 9, 10, which are interconnected by means of bolts 11, 12. Bolt 11 is thereby threaded into shell part 9 and bolt 12 is connected to shell part 10 in a similar manner. It will be apparent that the two shell parts 9, 10 are drawn together by tightening the bolts 11, 12. The dimensions of clamping means 4 are thereby such that a solid clamping down around pipe 1 can be effected, so that clamping means 4 can no longer be moved relative to pipe 1. Because the edge 6 of clamping means 4 abuts against a radially oriented stop surface made up of part 7 of coupling piece 2, clamping means 4, and thus pipe 1, is secured against axial movement relative to coupling piece 2.

Figure 3 shows a partial longitudinal section of a second embodiment of a pipe coupling according to the invention. Also in this embodiment a pipe 1, only the end of which is shown in sectional view, is inserted into a coupling piece 2, which forms part of a device of some kind. In this embodiment the diameter of the hole of coupling piece 2 into which pipe 1 is inserted is considerably larger than the outside diameter of pipe 1. As a result of this pipe 1 can be readily slid into coupling piece 2, also when both parts are completely aligned. In this embodiment a sealing ring 3 is used, which sealing ring is configured such that an adequate sealing is effected even when pipe 1 is out of alignment with coupling piece 2.

Figure 4 is a view along line IV-IV of Figure 3, showing in particular the means by which shell parts 15, 16 of clamping means 4 are clamped down on pipe 1. Said means consist of a rod 17 bent in the shape of a semi-circle, which is threaded at both ends 14. The semi-circular part of rod 17 is provided around clamping means 4, and the ends 14 of rod 17 extend through holes in closing part 18, which abuts against clamping means 4 with a semi-circular edge. A solid clamping down of shell parts 15, 16 on pipe 1 can be effected by tightening bolts 19.

As is the case with the first embodiment, clamping means 4 of the second embodiment is provided with a radially inwardly oriented edge 6, which extends into a recess in coupling piece 2 formed for that purpose.

It will be apparent that it is possible in both embodiments to obtain a fixation between pipe 1 and coupling piece 2 which is capable of taking up a large axial force between said parts, on the one hand because an optimum clamped connection can be effected between clamping means 4 and pipe 1, whilst on the other hand a large axial force can be taken up also between said two parts, as a result of the manner in which clamping means 4 engages coupling piece 2. Generally an exact alignment between the pipe and the coupling piece is not required thereby, whilst moreover the depth of insertion of pipe 1 into coupling piece 2 may vary to a certain extent. On the other hand the pipe coupling is of simple design, comprising a minimum number of different parts.

## Claims

1. A pipe coupling comprising a coupling piece and clamping means for securing a pipe (1) to the coupling piece (2), wherein the coupling piece (2) is provided with a cylindrical hole in which the pipe (1) can extend, whereby the cylindrical hole is provided with a chamber in which a flexible sealing ring (3) is positioned, said clamping means (4) being provided with a cylindrical clamping surface for engaging said pipe (1) and with a radially inwardly oriented edge (6) which can extend behind a radially oriented stop surface at the outside of the coupling piece (2), whereby said radially oriented stop surface is the side wall of an outwardly open annual groove, characterized in that the groove is positioned closer to the open side of the cylindrical hole of the coupling piece (2), at its end facing the clamping means (4), than the chamber provided within said hole and that said clamping means (4) comprise two parts (9,10;15,16), each part being provided with a portion of said cylindrical clamping surface.

2. A pipe coupling according to claim 1, characterized in that said clamping means (4) is provided with two identical parts (9, 10; 15, 16) which are made of plate material, said parts together forming the cylindrical clamping surface and the said edge (6).

3. A pipe coupling according to any one of the preceding claims, characterized in that separate fastening means (14, 17, 18, 19) are provided around that part of the clamping means (4) which forms said cylindrical clamping surface.

4. A method for securing a pipe (1) within a coupling piece (2), wherein the end of said pipe (1) is inserted into said coupling piece (2) after a sealing ring (3) is positioned in a chamber provided within said coupling piece (2), and wherein a clamping means (4) is subsequently fitted around a part of said pipe (1) and around an adjacent part of said coupling piece (2), which clamping means (4) engages said coupling piece (2) by an inwardly extending edge (6), whereby said clamping means (4) engages said pipe (1) with a cylindrical clamping surface, whereby the said edge (6) of the clamping means (4) is inserted in an outwardly open annual groove, characterized in that the groove is positioned closer to the open side of the coupling piece (2), at its end facing the clamping means (4), than said chamber provided within said coupling piece (2).

## Patentansprüche

1. Eine Rohrkupplung mit einem Verbindungsstück und einem Klemmmittel zur Befestigung eines Rohrs (1) an dem Verbindungsstück (2), worin das Verbindungsstück mit einem zylindrischen Loch versehen ist, in das sich das Rohr (1) erstrecken kann und in dem sich eine Kammer befindet, in der ein flexibler Dichtungsring (3) angeordnet ist, besagtes Klemmmittel (4) weist eine zylindrische Klemmfläche zum Eingriff mit besagtem Rohr (1) und eine radial nach innen gerichtete Kante (6) auf, die sich bis hinter eine radial ausgerichtete Anschlagfläche an der Außenseite des Verbindungsstückes (2) erstreckt, wobei besagte radial ausgerichtete Anschlagfläche die Seitenwand einer nach außen offenen Nut ist, gekennzeichnet dadurch, daß die Nut näher der offenen Seite des zylindrischen Loches des Verbindungsstückes (2) positioniert ist, das an seinem Ende dem Klemmmittel gegenüberliegt, als die in besagtem Loch enthaltene Kammer, und daß besagtes Klemmmittel (4) zwei Teile (9, 10; 15,16) umfaßt, von denen jedes einen Teil der besagten zylindrischen Klemmfläche bildet.

2. Eine Rohrkupplung gemäß Anspruch 1, gekennzeichnet dadurch, daß besagtes Klemmmittel (4) zwei identische Teile aufweist (9, 10; 15,16), die aus plattenförmigen Material hergestellt sind, besagte Teile bilden zusammen die zylindrische Klemmfläche und die besagte Kante (6).

3. Eine Rohrkupplung gemäß einem der vorausgehenden Ansprüche, gekennzeichnet dadurch, daß separate Befestigungsmittel (14, 17, 18, 19) um den Teil des Klemmmittels (4) vorgesehen sind, der besagte zylindrische Klemmfläche bildet.

4. Ein Verfahren zur Befestigung eines Rohrs (1) in einem Verbindungsstück (2), worin das Ende des besagten Rohres (1) in besagtes Verbindungsstück (2) eingesetzt wird, nachdem ein Dichtungsring (3) in einer Kammer angeordnet worden ist, die sich in besagtem Verbindungsstück (2) befindet, und worin danach ein Klemmmittel (4) um einen Teil des besagten Rohres (1) und um einen benachbarten Teil des Verbindungsstückes (2) angepaßt wird und mit besagtem Verbindungsstück (2) durch eine nach innen gerichtete Kante (6) in Eingriff geht, wobei besagtes Klemmmittel (4) an besagtem Rohr (1) mit einer zylindrischen Klemmfläche angreift und wobei besagte Kante (6) des Klemmstückes (4) in eine nach außen offene ringförmige Nut eingesetzt wird, gekennzeichnet dadurch, daß die Nut näher der offenen Seite des Verbindungsstückes (2) positioniert ist, das an seinem Ende dem Klemmmittel (4) gegenüberliegt, als die in besagtem Verbindungsstück (2) enthaltene Kammer.

## Revendications

1. Raccord de tuyau comprenant une pièce de raccordement et un moyen de serrage pour fixer un tuyau (1) à la pièce de raccordement (2), dans lequel la pièce de raccordement (2) présente un trou cylindrique dans lequel le tuyau (1) peut s'étendre, le trou cylindrique comprenant une chambre dans laquelle est positionnée une bague (3) d'étanchéité souple, lesdits moyens de serrage (4) comportant une surface de serrage cylindrique destinée à venir porter contre ledit tuyau (1) et un rebord orienté radialement vers l'intérieur (6) qui peut s'étendre derrière une surface de butée orientée radialement à l'extérieur de la pièce de raccordement (2), ladite surface de butée orientée radialement constituant la paroi latérale d'une gorge annulaire ouverte vers l'extérieur, caractérisé en ce que la gorge est positionnée plus proche du côté ouvert du trou cylindrique de la pièce de raccordement (2), à son extrémité qui fait face aux moyens de serrage (4) que la chambre qui est prévue à l'intérieur dudit trou, et en ce que lesdits moyens de serrage (4), comprennent deux parties (9, 10; 15, 16), chaque partie comportant une partie de ladite surface cylindrique de serrage.

2. Raccord de tuyau selon la revendication 1, caractérisé en ce que lesdits moyens de serrage (4) comprennent deux parties identiques (9, 10; 15, 16) qui sont fabriquées d'un matériau en plaque, lesdites parties formant ensemble la surface de serrage cylindrique et ledit rebord (6).

3. Raccord de tuyau selon l'une quelconque des revendications précédentes, caractérisé en ce que des moyens séparés de fixation (14, 17, 18, 19) sont prévus autour de cette partie des moyens de serrage (4) qui constitue ladite surface de serrage cylindrique.

4. Procédé de fixation d'un tuyau (1) à l'intérieur d'une pièce de raccordement (2), dans lequel l'extrémité dudit tuyau (1) est introduite dans ladite pièce de raccordement (2) après qu'ait été positionnée une bague (3) d'étanchéité dans une chambre prévue à l'intérieur de ladite pièce de raccordement (2), et dans lequel des moyens de serrage (4) sont ensuite ajustés autour d'une partie dudit tuyau (1) et autour d'une partie adjacente de ladite pièce de raccordement (2), des moyens de serrage (4) venant porter contre ladite pièce de raccordement (2) par l'intermédiaire d'un rebord s'étendant vers l'intérieur (6), grâce à quoi lesdits moyens de serrage (4) portent contre ledit tuyau (1) au moyen d'une surface de serrage cylindrique, tandis que ledit rebord (6) des moyens de serrage (4) est introduit dans une gorge annulaire ouverte vers l'extérieur, caractérisé en ce que la gorge est positionnée plus proche du côté ouvert de la pièce de raccordement (2) à son extrémité qui fait face aux moyens de serrage (4) que ladite chambre prévue à l'intérieur de ladite pièce de raccordement (2).
